# EUROPEAN PATENT APPLICATION

(11) **EP 1 858 274 A1**
(43) Date of publication of application: **21.11.2007**
(21) Application number: 06791211.3
(22) Date of filing: 08.10.2006
(51) Int. Cl.: H04Q 7/28

(54) **A METHOD, SYSTEM AND TERMINAL FOR PROCESSING PoC SERVICE**

(30) Priority: 10.10.2005 CN 200510100289
(71) Applicant: Huawei Technologies Co Ltd, Longgang District, Shenzhen Guangdong 512-8129 (CN)
(72) Inventor: ZHANG, Shengting, Guangdong 518129 (CN); WU, Xugang, Guangdong 518129 (CN); SHEN, Hai, Guangdong 518129 (CN); WANG, Zheng, Guangdong 518129 (CN)
(74) Representative: Goddar, Heinz J.
(86) International application number: PCT/CN2006/002629
(87) International publication number: WO 2007/041943

(57) **Abstract**

A method for processing PoC service, comprising: PoC user terminal initiates a call to PoC media storage means to start the media storage means; then, establishing media stream path between the PoC server and PoC media storage means; and transferring media stream between the PoC server and the PoC media storage means; the present invention enables users to obtain complete contents of the whole session when they are absent from the session, and can be realized easily.

## Description

The present invention claims the priority of a Chinese Patent Application No. 200510100289.5, entitled "a method for processing PoC services", filed on October 18, 2005, with the Chinese State Intellectual Property Office, the entirety of which is incorporated herein by reference.

### Field of the Invention

The present invention relates to electrical communication technique, and particularly to a method, system and terminal for processing PoC services.

### Background of the Invention

A half-duplex Voice over IP (abbreviated as "VoIP") system adapted for mobile devices is defined in Push-to-Talk Over Cellular (abbreviated as "PoC") service. With this service, a user terminal may initiate a PoC session to a single user or a group of users. A general procedure of PoC is: a user terminal requests a session to a PoC server; the PoC server sends a session request to a single user or all members in a group; and the called party participates in the PoC session by answering the call.

At times, during the procedure of the session, the user requires being absent from the session for a while. Two approaches are used to deal with this situation at present:
1. The first approach: the user holds on the session, and the user terminal keeps the call without receiving media streams being transmitted. When the user participates in the session again, he/she only needs to release the held session to receive or send media streams. The disadvantage of this approach is that the user can not listen to or obtain media contents of this session during the period of his absence from the session, and can not get the integral information of the whole session.
2. The second approach: a PoC Box is used to record. The PoC Box is a functional entity which can store session data and session control information in a PoC session, and has similar functions as a voice mailbox. The user may transfer an ongoing session call to the PoC Box without keeping the call going on any more, and listen to the session contents when the session is ended. The disadvantage of this approach is that the user will lose control of the PoC Box session upon the call transfer, thereby unable to interfere with the PoC Box session activities, and the PoC Box is inconvenient for the user to operate.

### Summary of the Invention

An object of the present invention is to provide a method and system for processing PoC services with simple operations capable of ensuring the integrality of session content information and a PoC service processing terminal, thus solving the problems in the prior art that the user is unable to obtain the complete contents of the whole session when he/she is absent from the session, and the operation is hard for the user when he/she re-participates in the session after the call is transferred.

A method for processing PoC service according to the present invention includes:
Starting a PoC media storage device by initiating a call from a PoC user terminal to the PoC media storage device (e.g. PoC Box) via a PoC server;
Establishing a media stream path between the PoC server and the PoC media storage device; and
Delivering media streams between the PoC server and the PoC media storage device, with signaling streams transferred therebetween through the PoC user terminal.
the PoC user terminal initiates the call to the PoC media storage device via the PoC server in accordance with the following steps :
Sending a message INVITE without session description to the PoC media storage device from the PoC user terminal; and
Returning a response OK containing description of the PoC media storage device to the PoC user terminal from the PoC media storage device.
the media stream path between the PoC server and the PoC media storage device in accordance with the following steps:
   Sending a message re-INVITE or INVITE containing session description of the PoC media storage device from the PoC user terminal to the PoC server;
   Returning a response OK containing session description of the PoC server from the PoC server to the PoC user terminal;
   Sending a message ACK containing session description of the PoC server from the PoC user terminal to the PoC media storage device; and
   Sending a message ACK without session description from the PoC user terminal to the PoC server.

The method further includes:
Establishing a media stream connection between the PoC user terminal and the PoC server.

The media stream connection to the PoC server by the PoC user terminal is established in accordance with the following steps:
Sending a message re-INVITE containing session description of the PoC user terminal from the PoC user terminal to the PoC server;
Returning a response OK containing session description of the PoC server from the PoC server to the PoC user terminal; and
Returning a message ACK containing session description of the PoC user terminal from the PoC user terminal to the PoC server.

The media stream includes at least one of voice stream, video stream and picture.

The PoC media storage device is a PoC box.

The PoC media storage device is a storage device with PoC function embedded.

A PoC service processing terminal according to the present invention includes a signaling stream transfer unit, for starting a PoC media storage device by initiating a call to the PoC media storage device via a PoC server, and for transferring signaling streams between the PoC server and the PoC media storage device when media streams are being delivered between the PoC server and the PoC media storage device.

A system for processing PoC service according to the present invention includes a PoC user terminal, a PoC server and a PoC media storage device, wherein the PoC user terminal starts the PoC media storage device by initiating a call to the PoC media storage device via the PoC server; and the PoC user terminal transfers signaling streams between the PoC server and the PoC media storage device when a media stream path is established between the PoC server and the PoC media storage device to deliver media streams.

The advantageous effects of the present invention are: in the present invention, the PoC media storage device is started by initiating a call to the PoC media storage device from the PoC user terminal; a signaling link is established between the PoC user terminal and the PoC media storage device; and the PoC user terminal performs signaling transfer between the PoC server and the PoC media storage device in the present invention, to direct the media stream to the PoC media storage device. During the control procedures in the present invention, the PoC user terminal keeps the signaling link with the PoC server all the time, so that media streams can be stored while the PoC call is being performed. Furthermore, the PoC terminal can control the PoC media storage device conveniently, e.g., control the PoC media storage device receiving and terminating the media streams. Therefore, the present invention overcomes the problems in the prior art that the user is unable to obtain the integral information of the whole session, loses control of the PoC media storage device during the session, and operates inconveniently if he/she is absent from the session. Further, the real-time status of the user group can be monitored with the control method of the present invention.

In the present invention, if the PoC user terminal requires to return to the session, the PoC user terminal requires to only send a re-invitation request message to the PoC server, so as to establish a media data path between the PoC user terminal and the PoC server without being invited or requesting to join the session again. Therefore, the practicability of the present invention is improved.

### Brief Description of the Drawings

Figure 1 is a structural diagram of an embodiment of the system of the present invention;
Figure 2 is a flowchart of a first embodiment of the method of the present invention;
Figure 3 is a flowchart of a second embodiment of the method of the present invention;
Figure 4 is a flow diagram of a session restoration control by the PoC user terminal in the embodiment as shown in Figure 3 of the present invention;
Figure 5 is a flowchart of a third embodiment of the method of the present invention.

### Detailed Description of the Invention

Hereinafter, the present invention will be described in further detail with reference to the embodiments and the accompanied drawings.

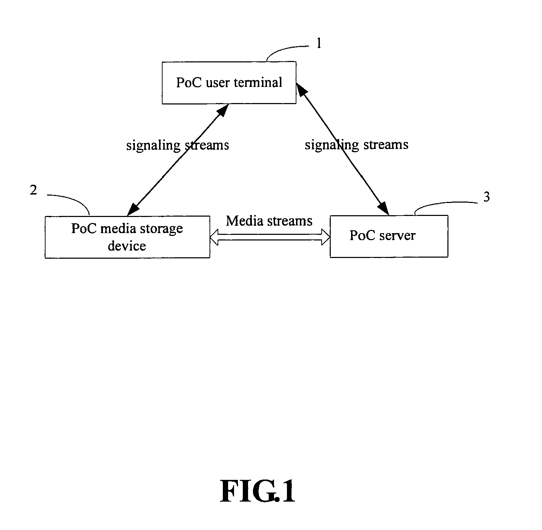

Figure 1 is a structural diagram of an embodiment of the system of the present invention. The PoC service processing system as shown in Figure 1 includes a PoC user terminal 1, a PoC media storage device 2 and a PoC server 3. The PoC server 3 is responsible for centralized control for a PoC session (including media distribution, talk burst control, session policy implementation for attendees of the session, and attendees information processing), and session control (including policy control for incoming sessions, and voice signaling relay between the PoC server and the PoC user terminal). Besides, the PoC server 3 performs relay on media streams as required. In this system, the PoC user terminal 1 starts the PoC media storage device 2 by initiating a call to the PoC media storage device 2 via the PoC server 3; and upon establishment of a media stream path between the PoC server 3 and the PoC media storage device 2 to deliver media streams, the PoC user terminal 1 transfers signaling streams between the PoC server 3 and the PoC media storage device 2.

In an embodiment of a PoC service processing terminal in the present invention, a signaling stream transferring unit is added in an ordinary terminal. The signaling stream transferring unit is adapted for starting the PoC media storage device by initiating a call to the PoC media storage device via the PoC server; and transferring signaling streams between the PoC server and the PoC media storage device when media streams are being delivered between the PoC server and the PoC media storage device. It should be noted that the signaling stream transferring unit may be set up independently and used when the PoC service processing is started according to embodiments of the present invention. The signaling stream transferring unit may be also embedded in a call processing unit of an ordinary terminal. The detailed implementation mode of the signaling stream transferring unit is known in related arts, which will not be described here.

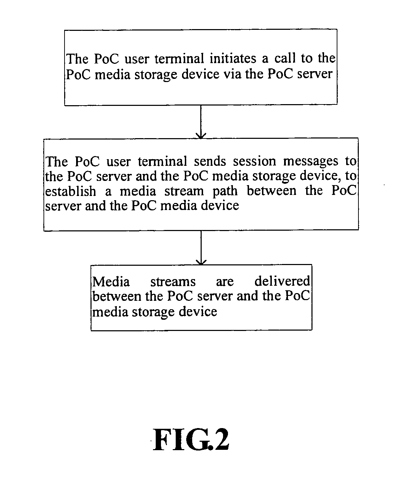

Figure 2 is a flowchart of a first embodiment of the method of the present invention. In figure 2, the PoC user terminal 1 is set as a member of a session group, and if the PoC user terminal 1 is absent for a while during the session, the PoC user terminal 1 will perform as follows:
1) The PoC user terminal 1 starts a PoC media storage device 2 by initiating a call to the PoC media storage device 2 via a PoC server 3.
2) The PoC user terminal 1 sends a session message to the PoC server 3 and the PoC media storage device 2, transfers signaling between the PoC server 3 and the PoC media storage device 2. A media stream path is established between the PoC server 3 and the PoC media storage device 2.
3) The PoC user terminal 1 transfers signaling streams between the PoC server 3 and the PoC media storage device 2 while media streams are delivered between the PoC server 3 and the PoC media storage device 2.

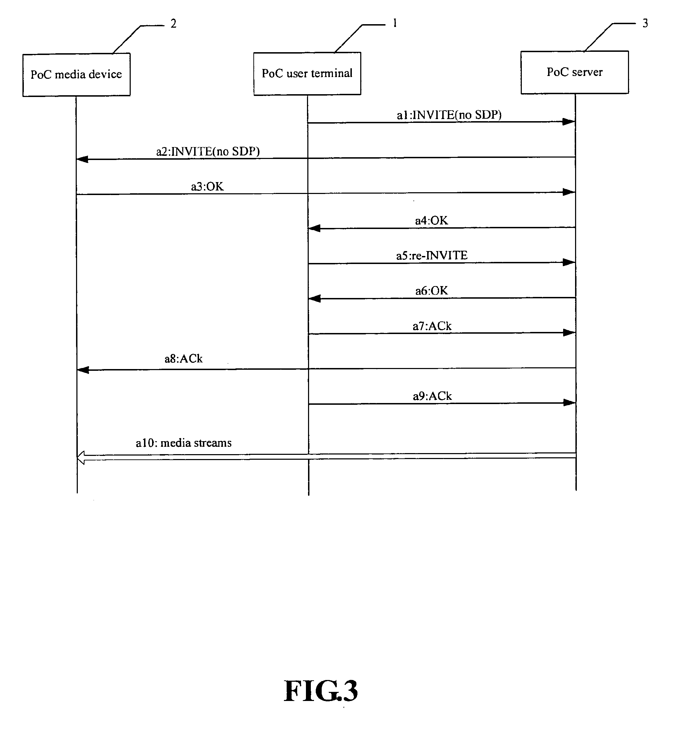

Figure 3 is a flowchart of a second embodiment of the method of the present invention. Messages INVITE, ACK and BYE as shown in figure 3 are defined in the document Request for Comments (RFC2543 protocol) of the Internet Engineering Task Force (IETF), and can be available with reference to the document RFC3261 of the IETF; messages OK and re-INVITE are defined in the document RFC3261 of the IETF; and the Session Description Protocol (SDP) can be available with reference to protocol RFC2543 of the IETF:
1. As the signaling stream al-a2 shows, the PoC user terminal 1 sends a message INVITE without session description in Session Description Protocol (SDP) to the PoC media storage device 2 through the PoC server.
2. As the signaling stream a3-a4 shows, the PoC media storage device 2 returns a response OK containing session description in SDP of the PoC media storage device 2 to the PoC user terminal 1 via the PoC server 3 according to general procedures of Session Initiating Protocol (SIP). Therefore, the PoC media storage device 2 is started by the PoC user terminal 1 with the steps 1 and 2.
3. As the signaling stream a5 shows, the PoC user terminal 1 sends a message re-INVITE containing session description in SDP of the PoC media storage device 2 to the PoC server 3;
4. As the signaling stream a6 shows, the PoC server 3 returns a response OK containing session description in SDP of the PoC server 3 to the PoC user terminal 1;
5. As the signaling streams a7-a8 shows, the PoC user terminal 1 sends a message ACK containing session description in SDP of the PoC server 3 to the PoC media storage device 2;
6. As the signaling stream a9 shows, the PoC user terminal 1 sends a message ACK without session description in SDP to the PoC media storage device 2 via the PoC server 3;
   With the above steps 3-6, the PoC user terminal 1 transfers signaling between the PoC server 3 and the PoC media storage device 2, and a media stream path is established between the PoC server 3 and the PoC media storage device 2.
7. As the signaling a10 shows, a media stream path is established between the PoC media storage device 2 and the PoC server 3, and the PoC server 3 delivers media streams to the PoC media storage device 2. The media streams may be voice streams or video streams or pictures.

In this embodiment, there's no direct signaling connection between the PoC server 3 and the PoC media storage device 2. The PoC user terminal 1 takes a role of signaling transfer between the PoC server 3 and the PoC media storage device 2.

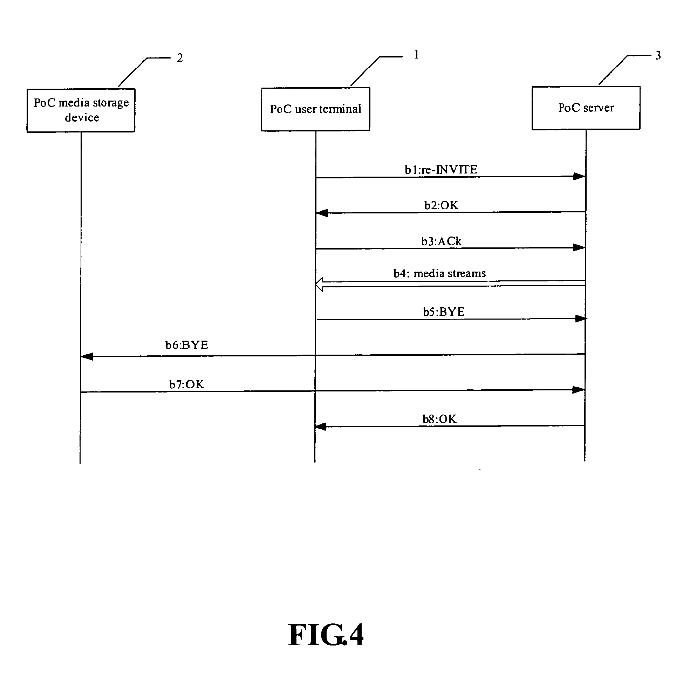

As shown in Figure 4, if required to restore the session to listen to the session contents directly, the PoC user terminal 1 sends a re-invitation request message to the PoC server 3 and establishes a media stream path to the PoC server 3. The particular control procedure is as follows:
I. As the signaling stream b1 shows, the PoC user terminal 1 sends a message re-INVITE containing session description in SDP of the PoC user terminal 1 to the PoC server 3;
II. As the signaling stream b2 shows, the PoC server 3 returns a response OK containing session description in SDP of the PoC server 3 to the PoC user terminal 1;
III. As the signaling stream b3 shows, the PoC user terminal 1 returns a message ACK containing session description in SDP of the PoC user terminal 1 to the PoC server 3;
IV. As the signaling stream b4 shows, the PoC server 3 directs the media streams to the PoC user terminal 1 based on a negotiation result, and the PoC media storage device 2 does not receive media streams.
V. As the signaling streams b5, b6, b7 and b8 show, the PoC user terminal 1 and the PoC media storage device 2 disconnect the signaling connection through messages BYEs and OKs.

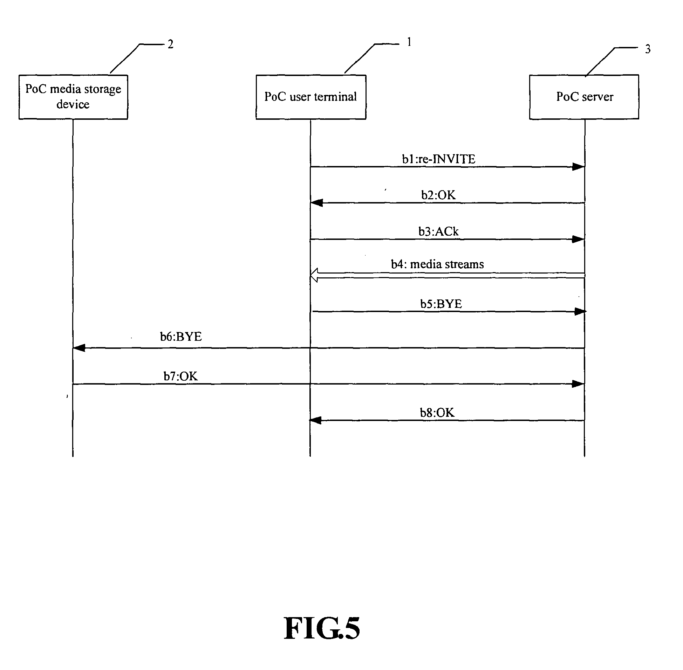

Figure 5 is a flowchart of a third embodiment of the method of the present invention. As shown in figure 5, this embodiment differs from the second embodiment in its application condition. In this embodiment, the PoC user terminal 1 is not an attendee of the session group originally, and the difference from embodiment 1 in specific control procedure lies in the above step 3. In particular, in this embodiment, the signaling stream a51 replaces the signaling stream a5 in the second embodiment. In this embodiment, the PoC user terminal 1 sends a further INVITE massage containing session description of the PoC media storage device 2 to the PoC server 3, and the other steps in the control procedure is the same as or similar with those in the embodiment 1, which will not be detailed herein.

In the present invention, the PoC media storage device 2 may be a storage device with PoC function embedded, such as PoC Box, or the PoC media storage device 2 is even set in other application systems. In these cases, only compatibility or matching of transmission protocols and data interfaces, and adaptability, conversion and naturalization of data types, will be involved. The control procedure thereof is essentially consistent with the above description. For an ordinary skilled in the art, this can be implemented without creative work, and thus will not be detailed herein.

## Claims

1. A method for processing PoC service, comprising:
starting a PoC media storage device by initiating a call from a PoC user terminal to the PoC media storage device via a PoC server;
establishing a media stream path between the PoC server and the PoC media storage device; and
delivering media streams between the PoC server and the PoC media storage device, with signaling streams transferred therebetween through the PoC user terminal.

2. The method for processing PoC service according to claim 1, wherein the PoC user terminal initiates the call to the PoC media storage device via the PoC server in accordance with the following steps :
sending a message INVITE without session description to the PoC media storage device from the PoC user terminal; and
returning a response OK containing description of the PoC media storage device to the PoC user terminal from the PoC media storage device.

3. The method for processing PoC service according to claim 1, wherein the media stream path between the PoC server and the PoC media storage device in accordance with the following steps:
sending a message re-INVITE containing session description of the PoC media storage device from the PoC user terminal to the PoC server;
returning a response OK containing session description of the PoC server from the PoC server to the PoC user terminal;
sending a message ACK containing session description of the PoC server from the PoC user terminal to the PoC media storage device; and
sending a message ACK without session description from the PoC user terminal to the PoC server.

4. The method for processing PoC service according to claim 1, 2 or 3, further comprising: establishing a media stream connection between the PoC user terminal and the PoC server.

5. The method for processing PoC service according to claim 4, wherein the media stream connection to the PoC server by the PoC user terminal is established in accordance with the following steps:
sending a message re-INVITE containing session description of the PoC user terminal from the PoC user terminal to the PoC server;
returning a response OK containing session description of the PoC server from the PoC server to the PoC user terminal; and
returning a message ACK containing session description of the PoC user terminal from the PoC user terminal to the PoC server.

6. The method for processing PoC service according to claim 1, 2 or 3, wherein the media stream includes at least one of voice stream, video stream and picture.

7. The method for processing PoC service according to claim 1, 2 or 3, wherein the PoC media storage device is a storage device with PoC function embedded.

8. The method for processing PoC service according to claim 7, wherein the PoC media storage device is a PoC box.

9. A PoC service processing terminal, comprising a signaling stream transfer unit, for starting a PoC media storage device by initiating a call to the PoC media storage device via a PoC server, and for transferring signaling streams between the PoC server and the PoC media storage device when media streams are being delivered between the PoC server and the PoC media storage device.

10. A system for processing PoC service, comprising a PoC user terminal, a PoC server and a PoC media storage device, wherein the PoC user terminal starts the PoC media storage device by initiating a call to the PoC media storage device via the PoC server; and the PoC user terminal transfers signaling streams between the PoC server and the PoC media storage device when a media stream path is established between the PoC server and the PoC media storage device to deliver media streams.
